# EUROPEAN PATENT APPLICATION

(11) **EP 4 342 626 A1**
(43) Date of publication of application: **27.03.2024**
(21) Application number: 21943051.9
(22) Date of filing: 27.05.2021
(51) Int. Cl.: B23Q 7/00

(54) **AUTOMATIC PALLET EXCHANGE DEVICE**

(71) Applicant: DMG Mori Co., Ltd., Yamatokoriyama-shi, Nara 639-1160 (JP)
(72) Inventor: NISHIKI, Takahiro, Yamatokoriyama-shi, Nara 639-1160 (JP); NOGUCHI, Yoshiyuki, Yamatokoriyama-shi, Nara 639-1160 (JP)
(74) Representative: Isarpatent
(86) International application number: PCT/JP2021/020244
(87) International publication number: WO 2022/249404

(57) **Abstract**

An automatic pallet changer (10) includes a first arm member (51A) and a second arm member (51B) that are turnable about a first axis (210) extending in an up-down direction and move reversely to each other to a first side and a second side across a predetermined plane (200) including first axis (210) in association with turning about the first axis. Each arm member (51) of first arm member (51A) and second arm member (51B) is pivotable about a second axis (220) extending in a horizontal direction and included in predetermined plane (200).

## Description

### TECHNICAL FIELD

This invention relates to an automatic pallet changer.

### BACKGROUND ART

For example, Japanese Patent Laying-Open No. 2005-081528 (PTL 1) discloses a pallet changer having side arms that extend toward a setup station and a pallet clamp and are supported rotatably in a horizontal direction. Each arm of the side arms is operable between a state in which a distal end of the arm is directed upward in a vertical direction and a state in which the arm extends in the horizontal direction.

### CITATION LIST

### PATENT LITERATURE

PTL 1: Japanese Patent Laying-Open No. 2005-081528

### SUMMARY OF INVENTION

### TECHNICAL PROBLEM

In the pallet changer disclosed in PTL 1, a distal end of an arm member is directed upward in the vertical direction during processing of a workpiece, so that a front-rear direction of a machine tool is designed to be compact while avoiding interference between the arm member and a table disposed in a processing area of the machine tool and turnable about an axis (A axis) parallel to the horizontal direction. In such a configuration, in order to further miniaturize the machine tool, the arm member is required to be disposed in a compact space.

Therefore, an object of this invention is to solve the above problem and provide an automatic pallet changer in which an arm member can be disposed in a compact space.

### SOLUTION TO PROBLEM

An automatic pallet changer of this invention includes a first arm member and a second arm member that are turnable about a first axis extending in an up-down direction and move reversely to each other to a first side and a second side across a predetermined plane including the first axis in association with turning about the first axis. Each arm member of the first arm member and the second arm member is pivotable about a second axis extending in a horizontal direction and included in the predetermined plane.

In the automatic pallet changer configured as described above, since each arm member of the first arm member and the second arm member is turnable about the second axis extending in the horizontal direction, an orientation of each arm member can be freely changed in accordance with an operation status of the automatic pallet changer. In this case, since the second axis is included in the predetermined plane including the first axis which is a turning center of the first arm member and the second arm member, the first arm member and the second arm member can be disposed in a compact space on the basis of the predetermined plane.

A processing area of a workpiece is preferably provided on the first side. An external space outside the processing area is provided on the second side. Each arm member pivots between a first state in which each arm member extends sideways from the second axis and a second state in which each arm member rises upward from the second axis.

In the automatic pallet changer configured as described above, the orientation of each arm member can be changed to an orientation suitable for conveying a pallet by pivoting each arm member to the first state. When each arm member is positioned in the processing area of the workpiece, the arm member pivots to the second state. Thus, the arm member can be retracted toward the predetermined plane in the processing area.

The automatic pallet changer preferably further includes a turning cover that is provided on the predetermined plane, turns about the first axis together with the first arm member and the second arm member, and separates the processing area from the external space. Each arm member includes a base rotatably supported about the second axis, and extending away from the second axis toward a radially outer side of the second axis, and a body bent from the base and extending upward along the turning cover in the second state.

The automatic pallet changer preferably further includes a turning cover that is provided on the predetermined plane, turns about the first axis together with the first arm member and the second arm member, and separates the processing area from the external space. The turning cover is provided with an opening in which each arm member in the second state is disposed.

The automatic pallet changer preferably further includes a turning cover that turns about the first axis together with the first arm member and the second arm member and separates the processing area from the external space. The turning cover is provided with a recess that has a recessed shape at a position overlapping the predetermined plane in a top view and in which each arm member in the second state is disposed.

In the automatic pallet changer configured as described above, it is possible to provide a structure in which each arm member and the turning cover do not interfere with each other when each arm member pivots to the second state.

The first arm member and the second arm member are preferably displaced from each other in an axial direction of the second axis. The automatic pallet changer further includes a first actuator that is connected to the first arm member and pivots the first arm member about the second axis, and a second actuator that is connected to the second arm member and pivots the second arm member about the second axis. The first actuator is provided at a position overlapping the first arm member and not overlapping the second arm member in the top view. The second actuator is provided at a position overlapping the second arm member and not overlapping the first arm member in the top view.

In the automatic pallet changer configured as described above, the first actuator and the second actuator can be disposed by utilizing an empty space generated by providing the first arm member and the second arm member to be displaced in the axial direction of the second axis.

### ADVANTAGEOUS EFFECTS OF INVENTION

As described above, this invention can provide an automatic pallet changer in which an arm member can be disposed in a compact space.

### BRIEF DESCRIPTION OF DRAWINGS

Fig. 1 is a top view of a machine tool including an automatic pallet changer according to a first embodiment of this invention.
Fig. 2 is a perspective view of the automatic pallet changer in Fig. 1.
Fig. 3 is a side view of the automatic pallet changer as viewed in a direction indicated by an arrow III in Fig. 1.
Fig. 4 is a side view schematically showing the automatic pallet changer in Figs. 1 to 3.
Fig. 5 is a top view schematically showing the automatic pallet changer (in which a first arm member is in a first state) in Fig. 4.
Fig. 6 is a top view schematically showing the automatic pallet changer (in which the first arm member is in a second state) in Fig. 4.
Fig. 7 is a side view schematically showing a first modification of the automatic pallet changer in Fig. 4.
Fig. 8 is a top view schematically showing the automatic pallet changer (in which the first arm member is in the first state) in Fig. 7.
Fig. 9 is a top view schematically showing the automatic pallet changer (in which the first arm member is in the second state) in Fig. 7.
Fig. 10 is a front view schematically showing the automatic pallet changer as viewed in a direction indicated by an arrow X in Fig. 9.
Fig. 11 is a side view schematically showing a second modification of the automatic pallet changer in Fig. 4.
Fig. 12 is a top view schematically showing the automatic pallet changer (in which the first arm member is in the first state) in Fig. 11.
Fig. 13 is a top view schematically showing the automatic pallet changer (in which the first arm member is in the second state) in Fig. 11.

### DESCRIPTION OF EMBODIMENTS

An embodiment of this invention will be described with reference to the drawings. In the drawings referred to below, the same or corresponding members are denoted by the same reference signs.

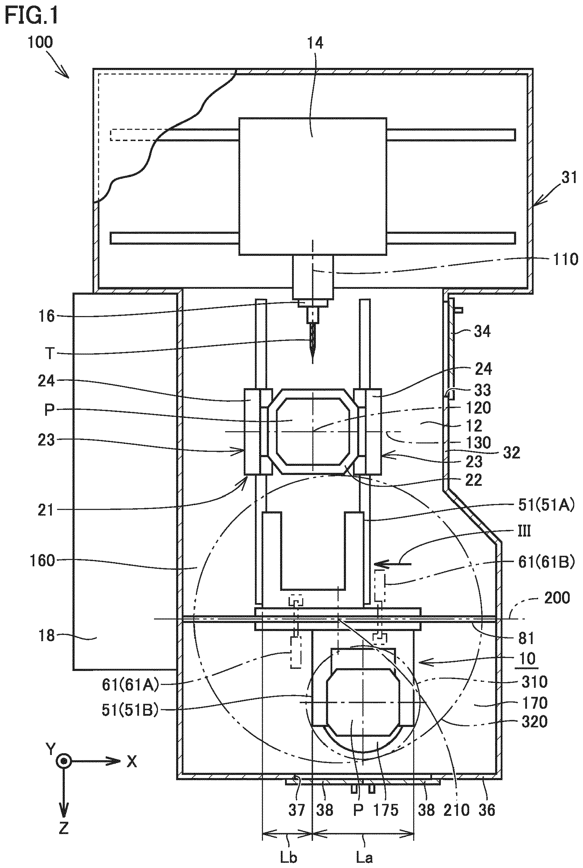

Fig. 1 is a top view of a machine tool including an automatic pallet changer according to the embodiment of this invention.

Referring to Fig. 1, an automatic pallet changer (APC) 10 according to the present embodiment is provided in a machine tool 100. Automatic pallet changer 10 is a device for automatically exchanging a pallet P that holds a workpiece in machine tool 100.

Automatic pallet changer 10 is a device for automatically exchanging pallet P between a processing area 160 of the workpiece and an external space outside processing area 160. The external space outside processing area 160 corresponds to a setup station 170.

Note that the automatic pallet changer according to the present invention is not limited to a device that automatically exchanges pallets inside and outside the processing area, and may be a device that automatically exchanges pallets between a plurality of setup stations, for example.

As a representative example, machine tool 100 including automatic pallet changer 10 is a horizontal machining center. The machine tool may be a vertical machining center, a composite processing machine that has a turning function using a fixed tool and a milling function using a rotating tool, or an AM/SM hybrid processing machine capable of performing additive manufacturing (AM) processing of a workpiece and subtractive manufacturing (SM) processing of a workpiece.

Machine tool 100 is a numerically controlled (NC) machine tool in which various operations for workpiece processing are automated by numerical control by a computer.

In the present specification, for convenience of description of the configurations of automatic pallet changer 10 and machine tool 100, an axis parallel to the horizontal direction is referred to as "X axis", an axis parallel to the horizontal direction and orthogonal to the X axis is referred to as "Z axis", and an axis parallel to an up-down direction is referred to as "Y axis".

First, an overall structure of machine tool 100 will be described. Machine tool 100 includes a cover body 31. Cover body 31 defines and forms processing area 160 and setup station 170, and forms an appearance of machine tool 100.

Processing area 160 is a space in which a workpiece is processed, and is sealed so that foreign matter such as chips or cutting oil associated with the processing of the workpiece does not leak to the outside of processing area 160. Setup station 170 is provided adjacent to processing area 160 in a Z-axis direction.

Setup station 170 is a space for attaching a workpiece before being processed in processing area 160 to pallet P, and detaching a workpiece after being processed in processing area 160 from pallet P. A pallet placing stand 175 for placing pallet P is installed in setup station 170. Note the workpiece may be attached and detached in setup station 170 by an operator or may be attached and detached automatically by a robot or the like.

Cover body 31 has a front cover 32 and a front door 34. Front cover 32 and front door 34 define and form a processing area 160.

Front cover 32 is provided with a first cover opening 33. First cover opening 33 opens processing area 160 to the external space. The operator can access the inside of processing area 160 through first cover opening 33. Front door 34 is provided in first cover opening 33. Front door 34 is operable between an open position where first cover opening 33 is opened and a closed position where first cover opening 33 is closed (a position of front door 34 shown in Fig. 1).

Cover body 31 further has a setup station cover 36 and a setup station door 38. Setup station cover 36 and setup station door 38 define and form setup station 170.

Setup station cover 36 is provided with a second cover opening 37. Second cover opening 37 opens setup station 170 to the external space. The operator can access the inside of setup station 170 through second cover opening 37. Setup station door 38 is provided in second cover opening 37. Setup station door 38 is operable between an open position where second cover opening 37 is opened and a closed position where second cover opening 37 is closed (a position of setup station door 38 shown in Fig. 1).

Machine tool 100 further has a bed 12, a tool spindle 16, a table 21, and a tool magazine 18.

Bed 12 is a base member that supports tool spindle 16, table 21, the tool magazine 18, automatic pallet changer 10, and the like, and is installed on a floor surface of a factory or the like. Bed 12 includes metal such as cast iron.

Tool spindle 16 rotates a tool T such as a drill, a reamer, or a milling cutter about a rotation center axis 110 parallel to the Z axis. Tool spindle 16 incorporates a clamp mechanism that detachably holds tool T. Tool spindle 16 is supported on bed 12 by a column 14 and the like erected on bed 12. Tool spindle 16 is provided to be movable in an X-axis direction and a Y-axis direction by various feed mechanisms, guide mechanisms, servomotors, and the like provided in column 14 and the like.

Table 21 is a device that holds a workpiece. Table 21 is provided to be movable in the Z-axis direction by various feed mechanisms, guide mechanisms, servomotors, and the like provided on bed 12 and the like.

Table 21 has a workpiece holder 22 and a table base 23. Workpiece holder 22 is provided on bed 12. Pallet P is attached to workpiece holder 22. Workpiece holder 22 incorporates a clamp mechanism portion that detachably holds pallet P and a rotation mechanism portion that rotates pallet P about a rotation center axis 120 parallel to a Y-Z plane. For example, a jig such as an angle rest to which a workpiece is attached is mounted on pallet P.

Table base 23 is provided in bed 12 to be movable in the Z-axis direction. Workpiece holder 22 is supported on bed 12 by table base 23.

Table base 23 has a pair of supports 24. The pair of supports 24 faces each other across workpiece holder 22 in the X-axis direction. Workpiece holder 22 is supported by the pair of supports 24 so as to be pivotable about a turning center axis 130 (A axis) extending in X-axis direction. By turning workpiece holder 22 about turning center axis 130, pallet P moves in a circumferential direction of turning center axis 130, and an orientation of the workpiece held by pallet P changes.

Tool magazine 18 is a device for storing a plurality of tools. Tool magazine 18 is provided on the opposite side of front cover 32 across processing area 160 in the X-axis direction. Tool exchange is performed between tool magazine 18 and tool spindle 16 by an automatic tool changer (ATC) (not shown).

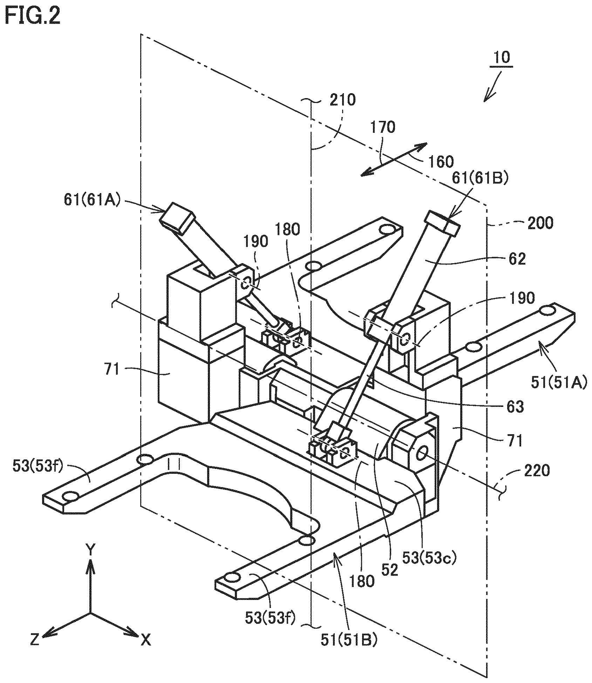

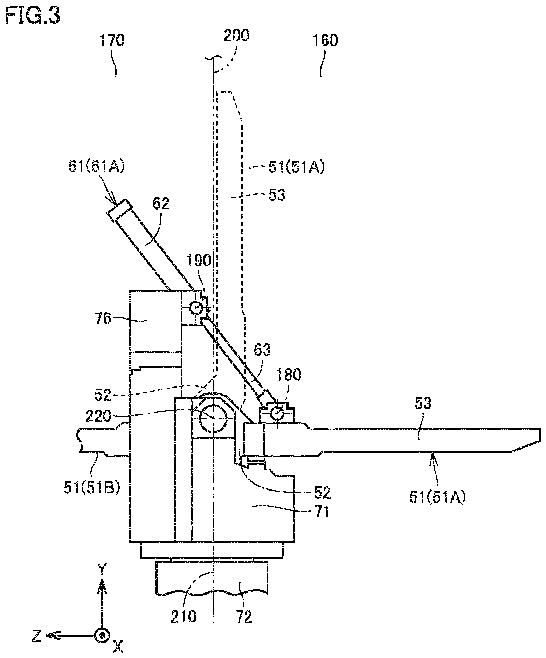

Next, a basic structure of automatic pallet changer 10 according to the present embodiment will be described. Fig. 2 is a perspective view of the automatic pallet changer in Fig. 1. Fig. 3 is a side view of the automatic pallet changer as viewed in a direction indicated by an arrow III in Fig. 1.

Referring to Figs. 1 to 3, automatic pallet changer 10 includes a first arm member 51A and a second arm member 51B, a support stand 71, and an arm drive mechanism portion 72.

First arm member 51A and second arm member 51B are turnable about a first axis 210. First axis 210 is a virtual straight line extending in the up-down direction (Y-axis direction). First arm member 51A and second arm member 51B can further slide in the up-down direction.

First arm member 51A and second arm member 51B move reversely to each other to a first side and a second side across a predetermined plane 200 in association with the turning about first axis 210. Predetermined plane 200 is a virtual plane including first axis 210.

Processing area 160 is disposed on the first side across predetermined plane 200, and setup station 170 is disposed on the second side across predetermined plane 200. Predetermined plane 200 is a virtual plane that forms a boundary between processing area 160 and setup station 170. Predetermined plane 200 is a vertical plane parallel to an X-Y plane.

Referring to Figs. 2 and 3, first arm member 51A and second arm member 51B have the same structure. Each arm member 51 of first arm member 51A and second arm member 51B has a base 52 and a body 53.

Base 52 is provided on an axis of a second axis 220 (described later). Base 52 is supported so as to be rotatable about second axis 220.

Body 53 extends in a direction away from base 52 toward a radially outer side of second axis 220. Body 53 has a root 53c and a pair of arm portions 53f. Root 53c is connected to base 52. The pair of arm portions 53f is provided apart from each other in an axial direction of second axis 220. The pair of arm portions 53f extends in an arm shape from root 53c to the opposite side of base 52 across root 53c.

Support stand 71 is attached to bed 12. Support stand 71 is attached to an end of bed 12 in the Z-axis direction. First arm member 51A and second arm member 51B are supported by support stand 71.

Arm drive mechanism portion 72 is connected to support stand 71. Arm drive mechanism portion 72 includes a motor for turning first arm member 51A and second arm member 51B about first axis 210, and a hydraulic cylinder for sliding first arm member 51A and second arm member 51B in the up-down direction.

Referring to Figs. 1 to 3, first arm member 51A and second arm member 51B are displaced from each other in the X-axis direction (the axial direction of second axis 220 (described later)). In a top view shown in Fig. 1, first arm member 51A and second arm member 51B are provided so as to be point-symmetric about first axis 210.

Arm member 51 (in Figs. 1 to 3, second arm member 51B) positioned in setup station 170 is provided at a position displaced from arm member 51 (in Figs. 1 to 3, first arm member 51A) positioned in processing area 160 in a direction (+X-axis direction) approaching front cover 32 in the X-axis direction. Arm member 51 (in Figs. 1 to 3, first arm member 51A) positioned in processing area 160 is provided at a position displaced from arm member 51 (in Figs. 1 to 3, second arm member 51B) positioned in setup station 170 in a direction (-X-axis direction) approaching tool magazine 18 in the X-axis direction.

As shown in Fig. 1, a mutual displacement amount Lb of first arm member 51A and second arm member 51B in the X-axis direction is smaller than a full width La of arm member 51 in the X-axis direction (Lb < La). Mutual displacement amount Lb of first arm member 51A and second arm member 51B in the X-axis direction may be less than or equal to a half of full width La of arm member 51 in the X-axis direction (Lb ≤ La × 1/2), or may be greater than a half of full width La of arm member 51 in the X-axis direction (Lb > La × 1/2).

Fig. 1 shows a workpiece 310 having a maximum diameter that can be mounted on pallet P, and a trajectory 320 of the maximum diameter drawn by workpiece 310 conveyed in a circumferential direction around first axis 210 when pallet P is exchanged by automatic pallet changer 10.

Machine tool 100 has an axis configuration in which column 14 on which tool spindle 16 is mounted moves in the X-axis direction and table 21 moves in the Z-axis direction. Therefore, in the top view shown in Fig. 1, cover body 31 protrudes in the X-axis direction at a position surrounding column 14, and is constricted in the X-axis direction at a position surrounding processing area 160 in which table 21 is disposed.

In the present embodiment, by adopting the structure in which first arm member 51A and second arm member 51B are displaced from each other in the X-axis direction, trajectory 320 drawn by workpiece 310 can be shifted in a direction (+X-axis direction) approaching front cover 32 in the X-axis direction, and further, a cover line of cover body 31 can be shifted in the +X-axis direction around automatic pallet changer 10. Cover body 31 originally has a shape projecting in the +X-axis direction at a position surrounding column 14. Therefore, it is possible to bring tool magazine 18 closer in the +X-axis direction while effectively using a dead space at a position adjacent to automatic pallet changer 10 in the +X-axis direction, and as a result, a maximum width of machine tool 100 in the X-axis direction can be reduced.

Next, a specific structure of automatic pallet changer 10 will be described. Referring to Figs. 2 and 3, each arm member 51 of first arm member 51A and second arm member 51B is pivotable about second axis 220. First arm member 51A and second arm member 51B is pivotable about second axis 220 independently of each other.

Second axis 220 is a virtual straight line extending in the horizontal direction. Second axis 220 is included in predetermined plane 200. First axis 210 extending in the up-down direction and second axis 220 extending in the horizontal direction are orthogonal to each other in a plane of predetermined plane 200.

Arm member 51 pivots between a first state in which arm member 51 extends sideways from second axis 220 (a state of first arm member 51A indicated by a solid line in Fig. 3) and a second state in which arm member 51 rises upward from second axis 220 (a state of first arm member 51A indicated by a dotted line in Fig. 3).

First arm member 51A and second arm member 51B are in the first state while pallet P is being conveyed. After the conveyance of pallet P, arm member 51 positioned at setup station 170 of first arm member 51A and second arm member 51B is kept in the first state. After the conveyance of pallet P, arm member 51 positioned in processing area 160 of first arm member 51A and second arm member 51B is in the second state while the workpiece is being processed in processing area 160.

Arm member 51 pivots by 90° about second axis 220 between the first state and the second state. When arm member 51 is in the first state, body 53 (the pair of arm portions 53f) extends in the horizontal direction (Z-axis direction). When arm member 51 is in the second state, body 53 (the pair of arm portions 53f) extends in the up-down direction (Y-axis direction) above second axis 220.

Note that a pivot angle of arm member 51 between the first state and the second state is not limited to 90°. For example, when the pivot angle of arm member 51 between the first state and the second state is an angle smaller than 90°, and arm member 51 is in the first state, body 53 (the pair of arm portions 53f) may extend in the horizontal direction (Z-axis direction), and when arm member 51 is in the second state, body 53 (the pair of arm portions 53f) may extend obliquely upward. In this case, the angle formed by body 53 (the pair of arm portions 53f) with respect to the horizontal direction may be 45° or more, or may be 60° or more.

Referring to Figs. 1 to 3, automatic pallet changer 10 further includes a first actuator 61A and a second actuator 61B.

First actuator 61A is connected to first arm member 51A. First actuator 61A is configured to pivot first arm member 51A about second axis 220. Second actuator 61B is connected to second arm member 51B. Second actuator 61B is configured to pivot second arm member 51B about second axis 220.

As shown in Fig. 1, first actuator 61A is provided at a position overlapping first arm member 51A and not overlapping second arm member 51B in the top view. Second actuator 61B is provided at a position overlapping second arm member 51B and not overlapping first arm member 51A in the top view.

Each actuator 61 of first actuator 61A and second actuator 61B includes a cylinder piston. Actuator 61 includes a cylinder 62 and a piston 63.

Cylinder 62 is supported by support stand 71. Cylinder 62 is supported by support stand 71 so as to be pivotable about a pivot center axis 190. Pivot center axis 190 extends in the X-axis direction. Piston 63 is fitted in cylinder 62. Piston 63 extends obliquely downward (±Z-axis direction and -Y-axis direction) from cylinder 62. Piston 63 is connected to arm member 51 at a distal end extending from cylinder 62. Piston 63 is connected to arm member 51 so as to be pivotable about a pivot center axis 180. Pivot center axis 180 extends in the X-axis direction.

By extending piston 63 in first actuator 61A, first arm member 51A is brought into the first state. By shortening piston 63 in first actuator 61A, first arm member 51A is brought into the second state. By extending piston 63 in second actuator 61B, second arm member 51B is brought into the first state. By shortening piston 63 in second actuator 61B, second arm member 51B is brought into the second state.

In Figs. 1 to 3, first arm member 51A is positioned in processing area 160, and second arm member 51B is positioned in setup station 170. In this case, cylinder 62 of first actuator 61A is disposed in setup station 170. In the top view shown in Fig. 1, cylinder 62 of first actuator 61A is provided at a position adjacent to second arm member 51B in the X-axis direction. Piston 63 of first actuator 61A extends from setup station 170 toward processing area 160, and is connected to body 53 (root 53c) of first arm member 51A at a distal end of piston 63.

Cylinder 62 of second actuator 61B is disposed in processing area 160. In the top view shown in Fig. 1, cylinder 62 of second actuator 61B is provided at a position adjacent to first arm member 51A in the X-axis direction. Piston 63 of second actuator 61B extends from processing area 160 toward setup station 170, and is connected to body 53 (root 53c) of second arm member 51B at a distal end of piston 63.

In a top view shown in Fig. 1, first actuator 61A and second actuator 61B are provided so as to be point-symmetric about first axis 210.

In such a configuration, first actuator 61A and second actuator 61B can be disposed by utilizing an empty space generated by providing first arm member 51A and second arm member 51B to be displaced in the X-axis direction (the axial direction of second axis 220).

An operation of automatic pallet changer 10 will be described. As shown in Figs. 1 to 3, first arm member 51A in the first state is positioned in processing area 160 in the initial state, and second arm member 51B in the first state is positioned in setup station 170. When the pallet is exchanged between processing area 160 and setup station 170, table 21 is moved in a direction (+Z-axis direction) away from tool spindle 16 in the Z-axis direction. As a result, body 53 (the pair of arm portions 53f) of first arm member 51A is inserted immediately below pallet P.

Next, first arm member 51A and second arm member 51B are slid upward. As a result, in processing area 160, pallet P mounted on table 21 is lifted by body 53 (the pair of arm portions 53f) of first arm member 51A, and in setup station 170, pallet P placed on pallet placing stand 175 is lifted by body 53 (the pair of arm portions 53f) of second arm member 51B. Next, first arm member 51A and second arm member 51B are turned by 180° about first axis 210. As a result, first arm member 51A is reversely moved from processing area 160 to setup station 170, and second arm member 51B is reversely moved from setup station 170 to processing area 160.

Next, first arm member 51A and second arm member 51B are slid downward. As a result, in setup station 170, pallet P is transferred from body 53 (the pair of arm portions 53f) of first arm member 51A to pallet placing stand 175, and in processing area 160, pallet P is transferred from body 53 (the pair of arm portions 53f) of second arm member 51B to table 21. Through the above process, the pallet exchange between processing area 160 and setup station 170 is completed.

On the other hand, when a workpiece is processed in processing area 160, first arm member 51A is changed from the first state to the second state by shortening piston 63 of first actuator 61A. When the processing of the workpiece is completed and the pallet is exchanged between processing area 160 and setup station 170, piston 63 of first actuator 61A is extended to change first arm member 51A from the second state to the first state.

Although the operation of first arm member 51A for processing a workpiece when first arm member 51A is positioned in processing area 160 has been described, the same applies to the operation of second arm member 51B for processing a workpiece when second arm member 51B is positioned in processing area 160.

In such a configuration, by setting arm member 51 positioned in processing area 160 of first arm member 51A and second arm member 51B to the second state of rising upward from second axis 220, it is possible to prevent interference between table 21 that turns about turning center axis 130 and arm member 51 in a state where table 21 is moved in the +Z-axis direction.

In such a configuration, second axis 220 which is a pivot center of first arm member 51A and second arm member 51B is included in predetermined plane 200 including first axis 210 which is a turning center of first arm member 51A and second arm member 51B. Therefore, arm member 51 in the second state can be compactly disposed at a position closer to predetermined plane 200 forming the boundary between processing area 160 and setup station 170. As a result, it is possible to provide automatic pallet changer 10 close to a -Z-axis direction while sufficiently securing a movement amount (stroke length) of table 21 in the Z-axis direction, and thus, a full length of machine tool 100 in the Z-axis direction can be reduced.

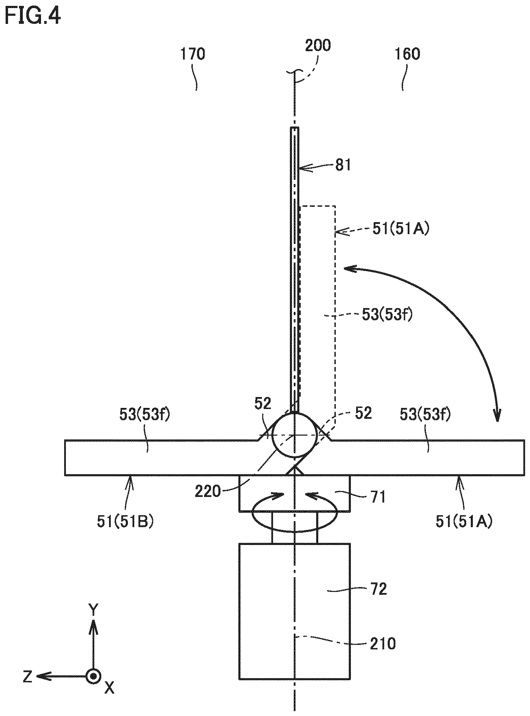

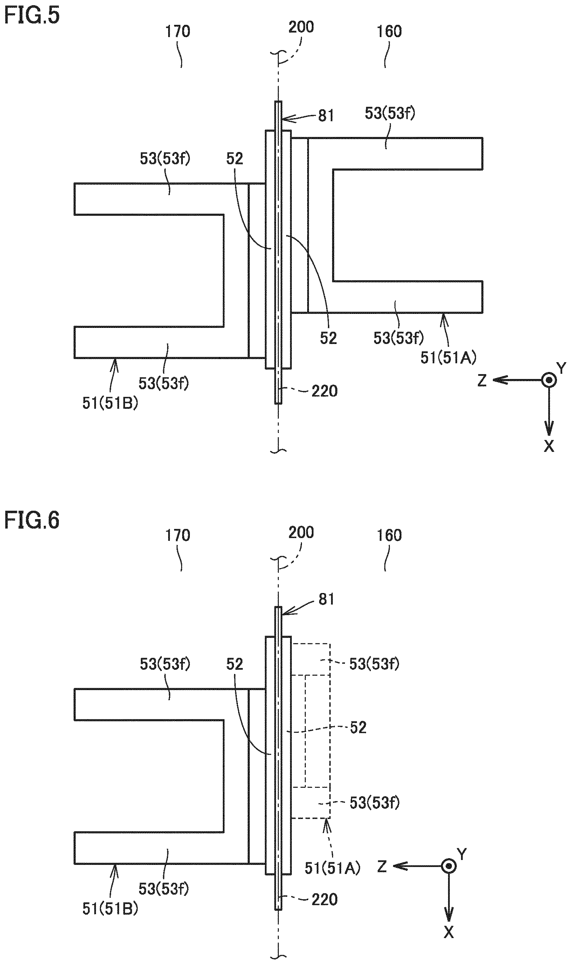

Fig. 4 is a side view schematically showing the automatic pallet changer in Figs. 1 to 3. Fig. 5 is a top view schematically showing the automatic pallet changer (in which the first arm member is in the first state) in Fig. 4. Fig. 6 is a top view schematically showing the automatic pallet changer (in which the first arm member is in the second state) in Fig. 4.

Referring to Figs. 1 to 6, automatic pallet changer 10 further includes a turning cover 81. Turning cover 81 is provided on predetermined plane 200. Turning cover 81 separates processing area 160 and setup station 170. Turning cover 81 turns about first axis 210 together with first arm member 51A and second arm member S1B.

Turning cover 81 includes a plate material that overlaps predetermined plane 200 and expands in a plane direction of predetermined plane 200. Turning cover 81 includes a flat plate whose thickness direction is a direction orthogonal to predetermined plane 200.

Turning cover 81 is supported by support stand 71. Turning cover 81 is erected on support stand 71. Turning cover 81 is provided immediately above second axis 220. Turning cover 81 is provided with a notch (not shown) for a passage of pistons 63 of actuators 61 extending between processing area 160 and setup station 170.

Base 52 of arm member 51 extends in a direction away from second axis 220 toward the radially outer side of second axis 220. Base 52 extends from second axis 220 in a radial direction of second axis 220. Body 53 of arm member 51 is bent from base 52 and extends upward along turning cover 81 in the second state of arm member 51. Body 53 is connected to a distal end of base 52 extending away in a direction toward the radially outer side of second axis 220.

In the first state of arm member 51, base 52 extends obliquely downward from second axis 220. In the first state of arm member 51, body 53 extends in the horizontal direction (Z-axis direction) from base 52. In the second state of arm member 51, base 52 extends obliquely upward from second axis 220. In the second state of arm member 51, body 53 extends upward from base 52 at a position adjacent to turning cover 81 in the Z-axis direction. Base 52 and body 53 are connected to each other at an obtuse angle.

Note that the angle formed by base 52 and body 53 is not limited, and may be, for example, 90°.

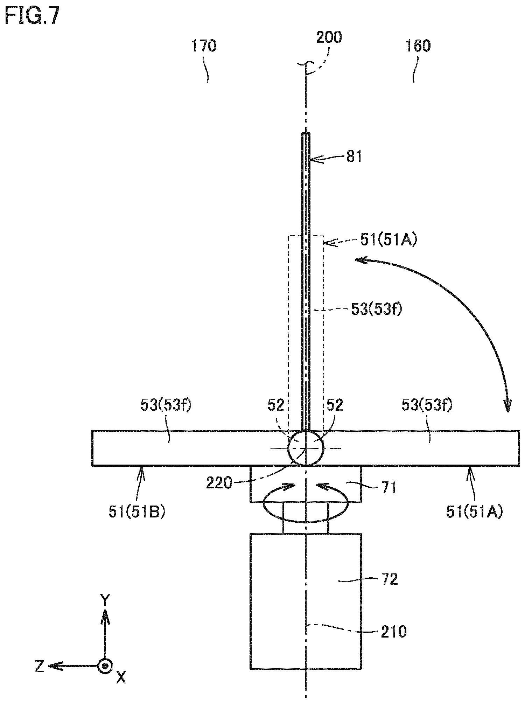

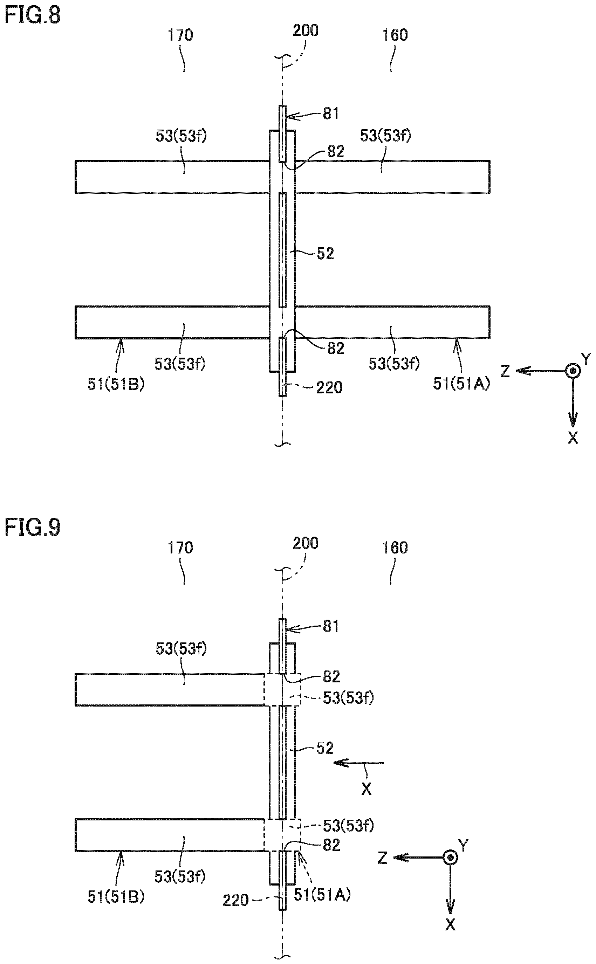

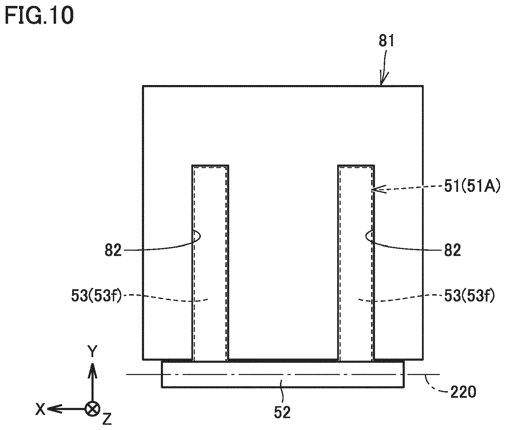

Fig. 7 is a side view schematically showing a first modification of the automatic pallet changer in Fig. 4. Fig. 8 is a top view schematically showing the automatic pallet changer (in which the first arm member is in the first state) in Fig. 7. Fig. 9 is a top view schematically showing the automatic pallet changer (in which the first arm member is in the second state) in Fig. 7. Fig. 10 is a front view schematically showing the automatic pallet changer as viewed in a direction indicated by an arrow X in Fig. 9.

Referring to Figs. 7 to 10, in the present modification, base 52 and body 53 of arm member 51 are aligned on a straight line in the radial direction of second axis 220. Base 52 has a shaft shape extending on the axis of second axis 220. Body 53 extends from base 52 in the radial direction of second axis 220.

First arm member 51A and second arm member 51B are provided symmetrically with respect to predetermined plane 200. In the present modification, first arm member 51A and second arm member 51B are not displaced from each other in the axial direction of second axis 220. The pair of arm portions 53f of first arm member 51A is aligned with the pair of arm portions 53f of second arm member 51B on a straight line in the Z-axis direction.

Turning cover 81 is provided with a pair of openings 82. The pair of openings 82 penetrates turning cover 81 in the Z-axis direction. The pair of openings 82 is provided at a position that matches the pair of arm portions 53f in the X-axis direction, respectively. The pair of openings 82 has an opening shape corresponding to a shape of the pair of arm portions 53f, respectively.

In the first state of arm member 51, body 53 (the pair of arm portions 53f) is provided so as to overlap a horizontal plane including second axis 220. In the second state of arm member 51, body 53 (the pair of arm portions 53f) is provided so as to overlap predetermined plane 200. In the second state of arm member 51, the pair of arm portions 53f is disposed in the pair of openings 82, respectively. In the second state of arm member 51, the pair of openings 82 is closed by the pair of arm portions 53f, respectively.

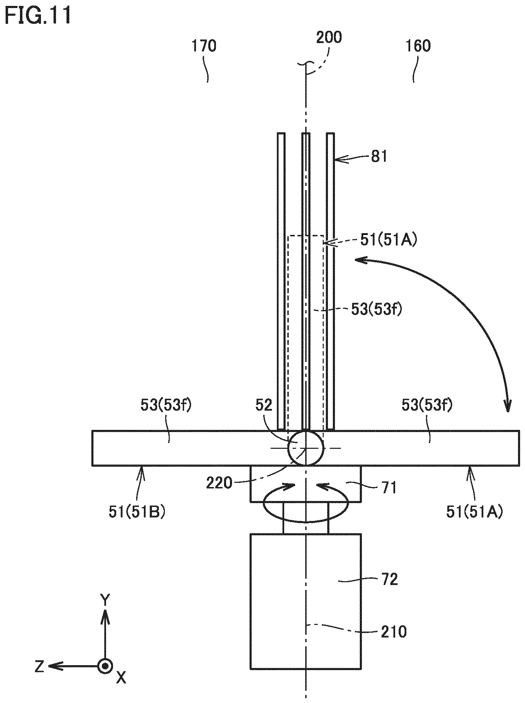

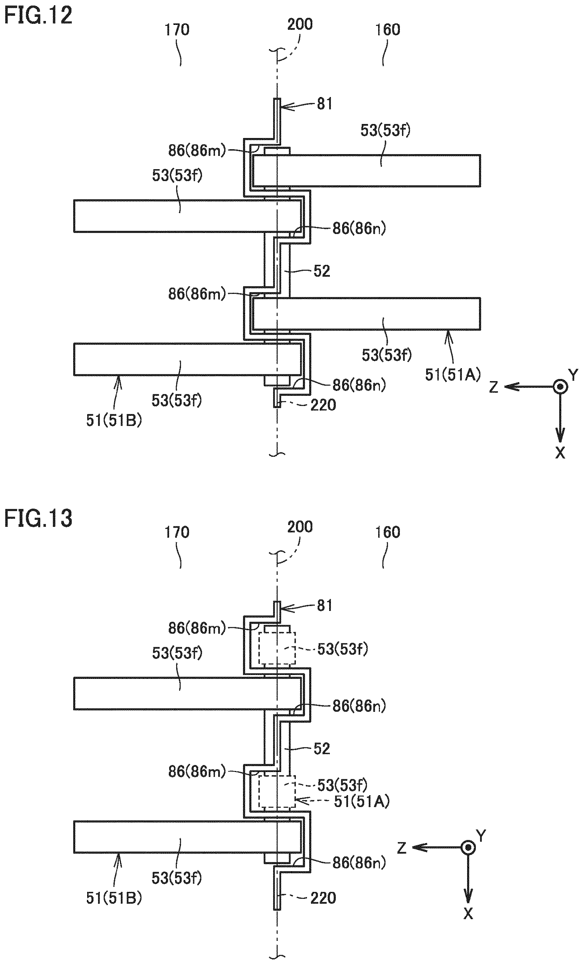

Fig. 11 is a side view schematically showing a second modification of the automatic pallet changer in Fig. 4. Fig. 12 is a top view schematically showing the automatic pallet changer (in which the first arm member is in the first state) in Fig. 11. Fig. 13 is a top view schematically showing the automatic pallet changer (in which the first arm member is in the second state) in Fig. 11.

Referring to Figs. 11 to 13, in the present modification, base 52 and body 53 of arm member 51 are arranged on a straight line in the radial direction of second axis 220. Base 52 has a shaft shape extending on the axis of second axis 220. Body 53 extends from base 52 in the radial direction of second axis 220.

Turning cover 81 is provided with a plurality of recesses 86. Each of recesses 86 has a recessed shape at a position overlapping predetermined plane 200 in the top view.

The plurality of first recesses 86 includes a pair of first recesses 86m and a pair of second recesses 86n. The pair of recesses 86m is provided at a position that matches the pair of arm portions 53f of first arm member 51A in the X-axis direction, respectively. When turning cover 81 is cut along a horizontal plane, first recess 86m has a sectional shape recessed from predetermined plane 200 toward second arm member 51B. The pair of second recesses 86n is provided at a position that matches the pair of arm portions 53f of second arm member 51B in the X-axis direction, respectively. When turning cover 81 is cut along a horizontal plane, second recess 86n has a sectional shape recessed from predetermined plane 200 toward first arm member 51A.

In the first state of arm member 51, body 53 (the pair of arm portions 53f) is provided so as to overlap a horizontal plane including second axis 220. In the second state of arm member 51, body 53 (the pair of arm portions 53f) is provided so as to overlap predetermined plane 200. In the second state of first arm member 51A, the pair of arm portions 53f of first arm member 51A is disposed in the pair of first recesses 86m, respectively. In the second state of second arm member 51B, the pair of arm portions 53f of second arm member 51B is disposed in the pair of second recesses 86n, respectively.

The configuration of arm member 51 and turning cover 81 described above can prevent arm member 51 from interfering with turning cover 81 in the second state of arm member 51.

To summarize the structure of automatic pallet changer 10 according to the embodiment of this invention described above, automatic pallet changer 10 according to the present embodiment includes first arm member 51A and second arm member 51B that are turnable about first axis 210 extending in the up-down direction and move reversely to each other to the first side and the second side across predetermined plane 200 including first axis 210 in association with turning about the first axis. Each arm member 51 of first arm member 51A and second arm member 51B is pivotable about second axis 220 extending in the horizontal direction and included in predetermined plane 200.

In automatic pallet changer 10 according to the embodiment of this invention configured as described above, foldable arm member 51 pivotable about second axis 220 extending in the horizontal direction can be disposed in a compact space on the basis of predetermined plane 200 including first axis 210 which is the turning center of arm member 51.

It should be understood that the embodiment disclosed herein is illustrative in all respects and not restrictive. The scope of the present invention is defined by not the description above, but the claims, and it is intended that all modifications within the meaning and scope equivalent to the claims are included in the present invention.

### INDUSTRIAL APPLICABILITY

This invention is applied to, for example, a machine tool such as a horizontal machining center.

### REFERENCE SIGNS LIST

10: automatic pallet changer, 12: bed, 14: column, 16: tool spindle, 18: tool magazine, 21: table, 22: workpiece holder, 23: table base, 24: support, 31: cover body, 32: front cover, 33: first cover opening, 34: front door, 36: setup station cover, 37: second cover opening, 38: setup station door, 51: arm member, 51A: first arm member, 51B: second arm member, 52: base, 53: body, 53c: root, 53f: arm portion, 61: actuator, 61A: first actuator, 61B: second actuator, 62: cylinder, 63: piston, 71: support stand, 72: arm drive mechanism portion, 81: turning cover, 82: opening, 86: recess, 86m: first recess, 86n: second recess, 100: machine tool, 110, 120: rotation center axis, 130: turning center axis, 160: processing area, 170: setup station, 175: pallet placing stand, 180, 190: pivot center axis, 200: predetermined plane, 210: first axis, 220: second axis, 310: workpiece, 320: trajectory, P: pallet, T: tool

## Claims

1. An automatic pallet changer comprising:
a first arm member and a second arm member that are turnable about a first axis extending in an up-down direction and move reversely to each other to a first side and a second side across a predetermined plane including the first axis in association with turning about the first axis, wherein
each arm member of the first arm member and the second arm member is pivotable about a second axis extending in a horizontal direction and included in the predetermined plane.

2. The automatic pallet changer according to claim 1, wherein
a processing area of a workpiece is provided on the first side,
an external space outside the processing area is provided on the second side, and
the each arm member pivots between a first state in which the each arm member extends sideways from the second axis and a second state in which the each arm member rises upward from the second axis.

3. The automatic pallet changer according to claim 2, further comprising a turning cover that is provided on the predetermined plane, turns about the first axis together with the first arm member and the second arm member, and separates the processing area from the external space, wherein
the each arm member includes a base rotatably supported about the second axis and extending away from the second axis toward a radially outer side of the second axis, and a body bent from the base and extending upward along the turning cover in the second state.

4. The automatic pallet changer according to claim 2, further comprising a turning cover that is provided on the predetermined plane, turns about the first axis together with the first arm member and the second arm member, and separates the processing area from the external space, wherein
the turning cover is provided with an opening in which the each arm member in the second state is disposed.

5. The automatic pallet changer according to claim 2, further comprising a turning cover that turns about the first axis together with the first arm member and the second arm member and separates the processing area from the external space, wherein
the turning cover is provided with a recess that has a recessed shaped at a position overlapping the predetermined plane in a top view and in which the each arm member in the second state is disposed.

6. The automatic pallet changer according to any one of claims 1 to 5, wherein
the first arm member and the second arm member are displaced from each other in an axial direction of the second axis,
the automatic pallet changer includes
a first actuator that is connected to the first arm member and pivots the first arm member about the second axis, and
a second actuator that is connected to the second arm member and pivots the second arm member about the second axis,
the first actuator is provided at a position overlapping the first arm member and not overlapping the second arm member in the top view, and
the second actuator is provided at a position overlapping the second arm member and not overlapping the first arm member in the top view.
